# FASCICULE DE BREVET EUROPEEN

(11) **EP 2 128 805 B1**
(45) Date de publication et mention de la délivrance du brevet: **26.10.2011**
(21) Numéro de dépôt: 09160145.0
(22) Date de dépôt: 13.05.2009
(51) Int. Cl.: G06K 19/077

(54) **Carte à puce ayant des moyens électroniques complémentaires**
Chipkarte mit zusätzlichen elektronischen Mitteln
Smart card with additional electronic means

(30) Priorité: 29.05.2008 CH 8222008
(43) Date de publication de la demande: 02.12.2009
(73) Titulaire: EM Microelectronic-Marin SA, 2074 Marin (CH)
(72) Inventeur: Willemin, Michel, 2515 Prêles (CH)
(74) Mandataire: Ravenel, Thierry Gérard Louis

(56) Documents cités:
- EP-A- 2 031 548
- WO-A-2005/008578
- WO-A-2007/131052
- DE-A1-102004 014 809
- DE-U1- 20 013 622
- US-A1- 2006 131 393
- US-A1- 2008 048 857

## Description

L'invention concerne une carte à puce, telle qu'une carte SIM, qui comprend au moins un circuit intégré muni d'une unité mémoire, dans laquelle peuvent être mémorisées des données personnelles et/ou au moins un code d'identification de la carte à puce et/ou des paramètres de configuration. Le circuit intégré est enfermé ou encapsulé dans un matériau isolant de préférence opaque formant ladite carte. La carte à puce comprend également des moyens de liaison pour communiquer avec un instrument électronique dans lequel ladite carte à puce peut par exemple être placée. Ces moyens de liaison sont électriquement reliés à des plages correspondantes de contact du circuit intégré.

Il faut entendre par moyens de liaison essentiellement tout moyen pour communiquer notamment des données et/ou des commandes avec un instrument électronique. Ces moyens de liaison peuvent être par exemple une zone de contacts électriques accessibles sur au moins une face de la carte à puce. Les contacts électriques de ladite zone de contacts sont destinés à venir en contact de bornes de contact complémentaires d'un instrument électronique dans lequel peut être placée ladite carte à puce.

La carte à puce peut être par exemple une carte SIM ou une carte mémoire ou une carte de crédit dans un format permettant leur placement dans un instrument électronique, qui peut être par exemple un téléphone portable (cellulaire). Dans le cas d'un instrument de télécommunication comme un téléphone portable, cette carte à puce peut être de préférence une carte SIM, qui est adaptée pour pouvoir être insérée dans un logement prévu à l'intérieur dudit téléphone et connectée à des bornes de contact du téléphone. Dans un réseau cellulaire du type GSM, l'utilisation d'une telle carte à puce dans l'instrument électronique, notamment dans le téléphone portable, permet d'assurer l'identification d'un utilisateur par l'intermédiaire d'un opérateur du système de télécommunication. Cette carte à puce permet aussi d'assurer la compatibilité et l'interchangeabilité des téléphones portables au sein de ce système de télécommunication.

Ces cartes à puce permettent à l'utilisateur d'accéder au système de télécommunication mobile via un fournisseur ou opérateur de réseau approprié. Elles comprennent donc des données, qui définissent les modalités d'accès au système de télécommunication mobile et permettent en outre la mémorisation de données complémentaires relatives à l'utilisateur. Ces données complémentaires concernent par exemple un numéro d'identification personnel et/ou éventuellement un répertoire de numéros d'appels téléphoniques.

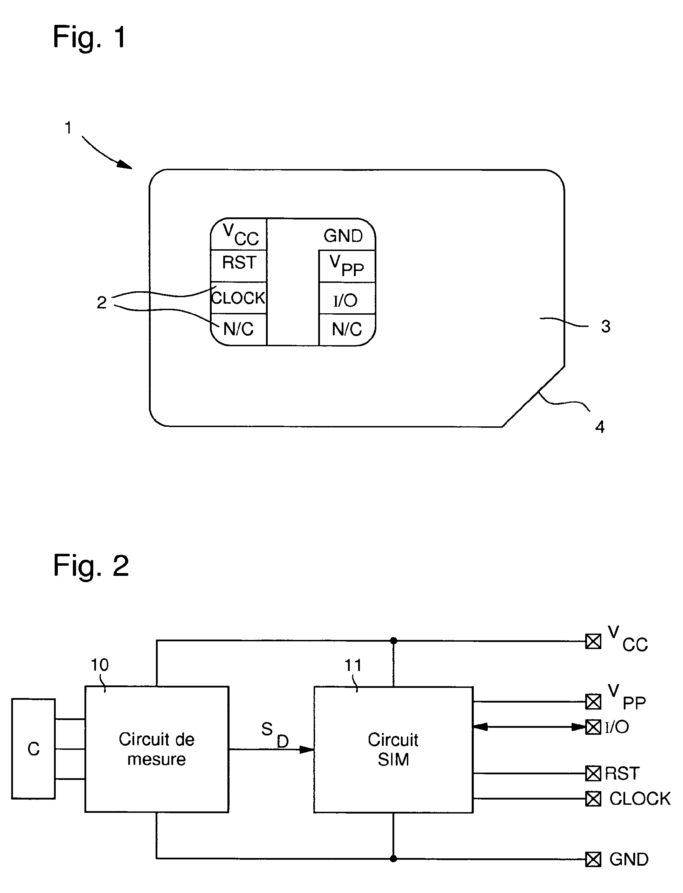

Chaque carte à puce du type SIM (Subscriber Identity Module) présente des dimensions et caractéristiques physiques qui sont définies par des standards internationaux, tels que notamment les standards ISO/IEC 7810, 7816-1 et 7816-2. Une telle carte à puce se présente ainsi sous la forme d'une carte en matière plastique dans laquelle est logée au moins un circuit intégré. Il existe deux formats standard d'une telle carte à puce pour équiper un instrument électronique portable. Le premier format est comparable à celui d'une carte de crédit (85.60 mm x 53.98 mm x 0.80 mm). Le deuxième format présente des dimensions plus petites de l'ordre de 25 mm x 15 mm x 0.80 mm, comme l'exemple illustré à la figure 1 et décrit dans la description suivante.

Il est également connu d'équiper une telle carte à puce du type SIM de moyens électroniques, telles qu'un dispositif RFID pour la communication bidirectionnelle de données au moyen d'une antenne du dispositif RFID, qui est logée dans la carte à puce. A ce titre, on peut citer le document de brevet US 2007/0281549, qui fait mention de cette fonction RFID en liaison au circuit intégré de ladite carte à puce. Cependant un tel dispositif RFID n'a que des fonctions similaires à celles liées à la téléphonie.

Dans le document de brevet DE 199 55 120, il est également décrit une carte à puce, qui comprend un circuit intégré avec une mémoire destinée à mémoriser des données d'identification d'un produit et permettre la lecture de données mémorisées. Le circuit intégré est relié à un ou plusieurs capteurs capables de fournir des données relatives à des conditions environnementales. Un des capteurs peut être un accéléromètre ou un capteur de température. Les données fournies par exemple par l'accéléromètre sont mémorisées dans la mémoire pour pouvoir être lues et utilisées de manière passive par la suite par un appareil de lecture. Les données fournies par l'accéléromètre ne sont pas exploitables de manière active pour la commande directe d'une action ou d'une fonction d'un instrument électronique, dans lequel la carte pourrait être placée.

L'invention a donc pour but de fournir une carte à puce qui comprend des moyens électroniques complémentaires pour effectuer des fonctions différentes de celles du circuit intégré traditionnel de ladite carte à puce et susceptibles d'être utilisées pour la commande directe d'une action ou d'une fonction d'un instrument électronique.

A cet effet, l'invention concerne une carte à puce du type SIM citée ci-devant, qui comprend les caractéristiques telles que définies dans la revendication indépendante 1.

Des formes d'exécution particulières de la carte à puce sont définies dans les revendications dépendantes 2 à 13.

Un avantage de la carte à puce, telle qu'une carte SIM, est qu'elle permet une fois insérée et connectée dans un instrument portable, tel qu'un téléphone portable, de fournir des signaux de données et/ou de commandes sur la base d'au moins une mesure effectuée par le circuit de mesure à capteur.

Dans le cas de préférence d'un capteur de mouvement, tel qu'un capteur d'accélération ou de choc, une commande peut être fournie directement à l'instrument électronique portable ou par l'intermédiaire du circuit intégré de ladite carte. Cette commande relative au mouvement détecté peut permettre à l'instrument de reconnaître des actions ou

Dans le document de brevet EP 2 031 548 A1, il est décrit une carte à puce du type SIM ayant des moyens de communication RFID. De manière à éviter toute utilisation abusive de la carte, il est prévu au moins un capteur pour détecter un mouvement de la carte ou la température de la carte maintenue par un utilisateur. Cependant, le capteur ne fournit pas de signaux pour la commande directe d'une action d'un instrument électronique.

Dans le document WO 2007/131052 A1, il est décrit un dispositif de communication mobile, tel qu'un téléphone portable. Ce dispositif comprend un capteur d'entrée, une unité mémoire, une unité de traitement et une antenne pour la transmission de données financières. Le dispositif n'est également pas prévu pour exploiter de manière active une commande d'une action d'un instrument électronique sur la base d'une mesure d'un capteur de mouvement.

Comme pour le précédent document, le document de brevet DE 10 2004 014809 A1 décrit un instrument portable du type PDA dans lequel il est inséré une carte mémoire. Un ou plusieurs capteurs peuvent être introduits dans ladite carte mémoire, mais ne permettent pas d'exploiter de manière active une commande d'une action d'un instrument électronique.

L'invention a donc pour but de fournir une carte à puce qui comprend des moyens électroniques complémentaires pour effectuer des fonctions différentes de celles du circuit intégré traditionnel de ladite carte à puce et susceptibles d'être utilisées pour la commande directe d'une action ou d'une fonction d'un instrument électronique.

A cet effet, l'invention concerne une carte à puce citée ci-devant, qui comprend les caractéristiques telles que définies dans la revendication indépendante 1.

Des formes d'exécution particulières de la carte à puce sont définies dans les revendications dépendantes 2 à 13.

Un avantage de la carte à puce, telle qu'une carte SIM, est qu'elle permet une fois insérée et connectée dans un instrument portable, tel qu'un téléphone portable, de fournir des signaux de données et/ou de commandes sur la base d'au moins une mesure effectuée par le circuit de mesure à capteur.

Dans le cas de préférence d'un capteur de mouvement, tel qu'un capteur d'accélération ou de choc, une commande peut être fournie directement à l'instrument électronique portable ou par l'intermédiaire du circuit intégré de ladite carte. Cette commande relative au mouvement détecté peut permettre à l'instrument de reconnaître des actions ou fonctions à effectuer préprogrammées par l'utilisateur. Par exemple, il peut être envisagé d'exécuter une fonction spécifique dans l'instrument par une seule accélération ou secousse ou impulsion imposée à la carte à puce ou plusieurs secousses ou impulsions successives imposées à la carte à puce.

Avantageusement, il peut encore être envisagé avec un tel circuit de mesure à capteur de mouvement de fournir un signal numérique de sortie de mesure, qui peut être mémorisé dans un registre dédicacé de l'unité mémoire du circuit intégré. Ce signal de sortie peut permettre de commander l'instrument portable pour une reconnaissance de modèles, de menus, de mouvements du porteur de l'instrument, de chocs subis par l'instrument, ou pour tracer des dessins. Pour ce faire, le circuit de mesure à capteur peut être de préférence un accéléromètre ou podomètre utilisant une mesure d'une variation capacitive de condensateurs montés en différentiel d'un capteur capacitif. Cet accéléromètre peut être également un accéléromètre triaxial, qui permet de fournir des commandes à l'instrument portable, par exemple pour actionner à distance un engin mécanique, tel qu'un robot ou un véhicule.

Un avantage de ladite carte à puce montée dans l'instrument portable est que dans le cas où la carte à puce comprend un accéléromètre, la mesure d'accélération permet de fournir une commande à l'instrument portable pour le passage par exemple d'un mode basse consommation ou stand-by à un mode de fonctionnement normal.

Dans le cas où la carte à puce est une carte SIM ou une carte mémoire, tous les paramètres liés au circuit de mesure, notamment des paramètres de configuration, peuvent être mémorisés. Ces paramètres de configuration peuvent être propres à l'utilisateur de ladite carte à puce. Ceci permet de changer d'instrument portable, tel que le téléphone portable, dans lequel est placée ladite carte à puce, tout en gardant mémorisés tous ces paramètres, et sans devoir à chaque fois opérer la configuration escomptée en cas de changement d'instrument. Ces paramètres peuvent être mémorisés dans une mémoire prévue directement dans le circuit de mesure ou dans l'unité mémoire du circuit intégré.

La carte à puce peut avantageusement comprendre ses propres moyens d'alimentation électrique. Ces moyens d'alimentation électrique peuvent comprendre une cellule solaire ou un accumulateur d'énergie ou un dispositif RFID pour capter des signaux radiofréquences.

A cet effet, l'invention concerne également un instrument électronique comprenant une carte à puce, qui comprend les caractéristiques telles que définies dans la revendication indépendante 14.

Les buts, avantages et caractéristiques de la carte à puce apparaîtront mieux dans la description suivante de manière non limitative d'au moins une forme d'exécution illustrée par les dessins sur lesquels :
la figure 1 représente une vue de dessus d'une carte à puce sous la forme d'une carte SIM selon l'invention pour un téléphone portable, et
la figure 2 représente de manière simplifiée les composants électroniques de la carte à puce selon l'invention.

Dans la description suivante, toutes les parties de la carte à puce, qui sont bien connues d'un homme du métier dans ce domaine technique, ne sont relatées que de manière simplifiée.

La figure 1 représente une carte à puce ou carte intelligente (SMART card) sous la forme d'une carte SIM traditionnelle 1. Les caractéristiques principales de cette carte SIM 1, qui peut être utilisée dans un téléphone portable selon la présente invention sont ainsi sommairement décrites.

Cette carte SIM 1 se présente sous la forme d'un élément plat essentiellement rectangulaire possédant des dimensions par exemple de l'ordre de 15 mm x 25 mm, et d'épaisseur proche de 0.76 mm. Cette carte SIM 1 comporte en particulier un bord oblique 4 servant de détrompeur pour une bonne orientation de cette dernière, lorsqu'elle est insérée dans un logement prévu à cet effet dans le téléphone.

La carte SIM 1 comprend également des moyens de liaison 2 pour communiquer notamment des données et/ou des commandes avec un instrument électronique, tel qu'un téléphone portable dans lequel est placée ladite carte SIM. Ces moyens de liaison peuvent être de préférence une zone de contacts électriques accessibles 2, qui sont disposés sur au moins une face de ladite carte à puce. Les contacts électriques 2 sont représentés en nombre égal à huit, mais uniquement six de ces contacts sont généralement utilisés. Ces contacts électriques 2 sont reliés de manière traditionnelle à des plages de contact correspondantes d'un circuit intégré non représenté. Ce circuit intégré est ainsi enfermé dans le matériau opaque isolant 3 formant ladite carte à puce.

La zone de contacts électriques 2 est arrangée sur une face de la carte à puce selon des standards internationaux comme indiqués ci-devant. Une fois la carte à puce insérée dans le logement prévu d'un téléphone portable, les contacts électriques de la zone de contacts 2 sont connectés à des bornes de contact complémentaires prévues dans une position bien définie dans le téléphone. Une alimentation électrique peut être fournie par le téléphone à la carte par deux contacts électriques V_{CC} et GND de la zone de contacts 2. Il peut également être prévu un contact électrique RST pour recevoir éventuellement un signal de Reset, un contact électrique V_{PP} pour recevoir un signal de tension de programmation de l'unité mémoire, un contact électrique CLOCK pour recevoir ou fournir un signal d'horloge et un contact électrique I/O pour la réception ou le transfert de données ou de commandes.

Comme représenté schématiquement à la figure 2, ledit circuit intégré 11 pour une carte du type SIM comprend généralement une unité mémoire, non représentée, qui est reliée à une unité à microprocesseur, non représentée, pour le traitement de données ou commandes reçues ou transmises. L'unité mémoire peut comprendre une mémoire non volatile du type Flash ou EEPROM pour mémoriser des données personnelles, au moins un code d'identification de la carte à puce et des paramètres de configuration. L'unité mémoire contient également notamment des données définissant les modalités d'accès au système de télécommunication mobile.

La carte à puce selon l'invention comprend encore un circuit de mesure 10 à capteur C, qui est enfermé également dans le matériau opaque isolant formant ladite carte à puce. Ce circuit de mesure peut comprendre un capteur de mouvement C pour détecter un choc ou mesurer principalement une accélération. Il peut donc être utilisé comme circuit de mesure à capteur, un podomètre ou un accéléromètre à un seul axe ou triaxial. Ce capteur de mouvement C est donc un élément sous forme d'un module du type MEMS.

Il peut être envisagé d'utiliser un accéléromètre, qui comprend deux condensateurs montés en différentiel pour former un capteur capacitif dont la variation capacitive est mesurée par une interface capteur du circuit de mesure. L'interface capteur du circuit de mesure peut être réalisée par exemple sur la base d'une interface électronique telle que décrite notamment dans l'article rédigé par MM. H. Leutold et F. Rudolph, qui est paru dans la revue intitulée "Sensors and actuators" A21-A23 (1990), pages 278 à 281. Un accéléromètre piézo-résistif peut aussi être utilisé.

Cette interface capteur fournit un signal de mesure du paramètre physique (accélération) à des moyens de prétraitement du signal de mesure pour qu'ils fournissent un signal numérique de sortie S_{D} relatif à la mesure du paramètre. Ce signal de sortie peut être directement ou par l'intermédiaire du circuit intégré SIM 11, exploitable pour la commande d'une action ou d'une fonction d'un instrument portable, tel qu'un téléphone portable. Ceci permet d'opérer une commande rapide dans le téléphone.

Dans le cas de préférence d'un capteur de mouvement, pour la mesure d'une accélération ou d'un choc, une commande peut être fournie directement à l'instrument électronique portable ou par l'intermédiaire du circuit intégré de ladite carte. Cette commande relative au mouvement détecté peut permettre à l'instrument de reconnaître des actions ou fonctions à effectuer préprogrammées par l'utilisateur. Il peut être envisagé d'exécuter une fonction spécifique dans l'instrument par une seule secousse ou impulsion imposée à la carte à puce ou plusieurs impulsions successives imposées à la carte à puce dans un laps de temps défini.

Ce signal numérique de sortie S_{D} peut être mémorisé dans une mémoire du circuit de mesure ou de préférence dans un registre dédicacé de l'unité mémoire du circuit intégré SIM 11. La lecture de ce signal numérique mémorisé reste flexible dans le temps en fonction de l'utilisateur. Cette lecture dudit signal de sortie mémorisé peut être requise ainsi à tout moment. Cette unité mémoire peut également mémoriser des paramètres de configuration du circuit de mesure, notamment propres à un utilisateur de la carte à puce, et/ou différents signaux de sortie successifs du circuit de mesure. De cette manière, plusieurs données ou configurations personnelles sont mémorisées dans la mémoire du circuit de mesure 10 ou dans l'unité mémoire du circuit SIM 11. La carte à puce peut ainsi être placée dans n'importe quel autre instrument portable, c'est-à-dire dans n'importe quel autre téléphone portable sans devoir exécuter à nouveau toutes les opérations de programmation ou mémorisation de données ou commandes personnelles.

Le circuit de mesure à capteur peut comprendre à la suite de l'interface capteur, comme moyens de prétraitement encore une unité de traitement des signaux analogiques, un convertisseur analogique-numérique, une unité de commande et de traitement des signaux numériques, un oscillateur et un régulateur de tension régulée pour alimenter à une tension régulée les composants électroniques du circuit de mesure. Le signal numérique de sortie S_{D} peut ainsi être fourni par l'unité de commande et de traitement de manière à pouvoir être mémorisé dans un registre dédicacé dans l'unité mémoire du circuit SIM. Un tel agencement de composants électroniques du circuit de mesure est notamment décrit dans la demande de brevet suisse CH 01431/07 du même Demandeur, qui est incorporé ici par référence.

Dans une première forme d'exécution de la carte à puce, le circuit de mesure sans le capteur peut être réalisé dans le circuit intégré du circuit SIM de la carte à puce. Le capteur de mesure C est un élément microélectro-mécanique (MEMS), qui est relié électriquement à l'interface capteur du circuit de mesure. Ce capteur de mesure peut être monté sur le circuit intégré tout en s'assurant que l'épaisseur totale soit inférieure à l'épaisseur du matériau opaque de la carte à puce les enfermant. Cependant, ce capteur peut aussi être placé dans un même plan que ledit circuit intégré.

Dans une seconde forme d'exécution de la carte à puce, il peut aussi être envisagé de réaliser le circuit de mesure avec le capteur de mesure dans le même substrat semi-conducteur que le circuit intégré de la carte à puce.

Dans une troisième forme d'exécution de la carte à puce, le circuit de mesure sans le capteur est réalisé dans un second circuit intégré et relié électriquement au premier circuit intégré de la carte à puce. Les premier et second circuits intégrés peuvent être placés côté à côte dans le matériau isolant de la carte à puce. Le capteur MEMS, qui est relié électriquement à l'interface capteur du circuit de mesure, peut être monté sur le second circuit intégré ou placé dans un même plan que ce second circuit intégré.

Il peut encore être envisagé que la carte à puce comprenne encore de propres moyens d'alimentation électrique (mode stand-alone). Ces moyens d'alimentation électrique peuvent être constitués par une cellule solaire ou un accumulateur d'énergie électrique ou un dispositif RFID. Il peut être aussi prévu de monter plusieurs circuits intégrés dans la même carte à puce ou plusieurs circuits de mesure à capteur pour mesurer d'autres paramètres physiques, tels que la pression et/ou la température.

A partir de la description qui vient d'être faite, plusieurs variantes de réalisation de la carte à puce peuvent être conçues par l'homme du métier sans sortir du cadre de l'invention définie par les revendications. Dans le cas d'une carte à puce sous la forme d'une carte mémoire, la zone de contacts électriques peut se trouver sur un bord de ladite carte tout en ayant une partie des contacts électriques situés sur au moins une face principale de la carte. Les moyens de liaison de ladite carte à puce peuvent être également un dispositif de liaison sans fil, tel qu'un dispositif RFID ou un dispositif d'émission/réception de lumière. A l'intérieur du matériau opaque enfermant le ou les circuits intégrés, il peut être prévu un logement pour le capteur en fonction du type de paramètre physique à mesurer.

## Revendications

1. Carte à puce (1) du type SIM qui comprend au moins un circuit intégré (11) muni d'une unité mémoire, dans laquelle peuvent être mémorisées des données personnelles et/ou au moins un code d'identification de la carte à puce et/ou des paramètres de configuration, ledit circuit intégré étant enfermé dans un matériau isolant (3) formant ladite carte, la carte (1) comprenant également des moyens de liaison (2) pour communiquer avec un instrument électronique, lesdits moyens de liaison étant électriquement reliés à des plages correspondantes de contact du circuit intégré, la carte à puce comprenant en outre un circuit de mesure à capteur (10) pour la mesure d'un paramètre physique, afin de pouvoir fournir au moins un signal de sortie relatif à la mesure (S_{D}) du paramètre physique, ledit circuit de mesure à capteur (10) étant enfermé également dans le matériau isolant formant ladite carte à puce,
**caractérisé en ce que** le circuit de mesure à capteur comprend un capteur de mouvement (C) pour détecter un choc ou pour mesurer une accélération, et une interface capteur reliée au capteur, pour fournir un signal de mesure du paramètre physique à des moyens de prétraitement du signal de mesure de manière que les moyens de prétraitement fournissent un signal de sortie relatif à la mesure du paramètre et exploitable de manière active directement pour la commande d'une action ou d'une fonction d'un instrument électronique, et
**en ce que** le capteur de mouvement (C) est un élément micro électro-mécanique MEMS disposé dans un logement dans le matériau isolant enfermant le circuit intégré et le circuit de mesure.

2. Carte à puce (1) selon la revendication 1, **caractérisée en ce que** les moyens de liaison comprennent un dispositif de liaison sans fil et/ou une zone de contacts électriques (2) accessibles sur au moins une face de la carte destinés à venir en contact de bornes de contact complémentaires d'un instrument électronique, dans lequel peut être placée ladite carte à puce, lesdits contacts électriques étant électriquement reliés à des plages correspondantes de contact du circuit intégré, et **en ce que** le circuit de mesure à capteur (10) pour la mesure d'un paramètre physique peut fournir au moins un signal de sortie relatif à la mesure (S_{D}) du paramètre physique par l'intermédiaire du dispositif de liaison sans fil et/ou par un des contacts électriques (I/O) de la zone de contacts (2).

3. Carte à puce (1) selon la revendication 1, **caractérisée en ce que** le circuit de mesure à capteur est un accéléromètre triaxial.

4. Carte à puce (1) selon la revendication 1, **caractérisée en ce que** l'interface du circuit de mesure est prévue sur la base d'une seule ou plusieurs accélérations ou secousses successives de ladite carte à puce, pour fournir un signal pour commander l'exécution d'une action ou fonction préprogrammée dans l'instrument électronique.

5. Carte à puce (1) selon la revendication 1, **caractérisée en ce qu'**au moins un registre dédicacé dans l'unité mémoire du circuit intégré est prévu pour mémoriser le signal de sortie relatif à la mesure du paramètre du circuit de mesure.

6. Carte à puce (1) selon la revendication 1, **caractérisée en ce que** des paramètres de configuration du circuit de mesure, notamment propres à un utilisateur de la carte à puce, et/ou différents signaux de sortie successifs du circuit de mesure, sont mémorisés dans l'unité mémoire du circuit intégré.

7. Carte à puce (1) selon la revendication 1, **caractérisée en ce que** le circuit de mesure comprend un capteur de mouvement (C) et un capteur de pression et/ou de température, qui peuvent être alternativement mis en fonction.

8. Carte à puce (1) selon la revendication 4, **caractérisée en ce que** la carte SIM comprend en plus de l'unité mémoire, une unité à microprocesseur pour le traitement de données ou commandes reçues ou transmises par les moyens de liaison à un instrument électronique, tel qu'un téléphone portable, dans lequel peut être placée ladite carte à puce.

9. Carte à puce (1) selon l'une des revendications précédentes, **caractérisée en ce que** le circuit de mesure sans le capteur est réalisé dans le circuit intégré de la carte à puce.

10. Carte à puce (1) selon l'une des revendications 1 à 8, **caractérisée en ce que** le circuit de mesure avec le capteur est réalisé dans le même substrat semi-conducteur que le circuit intégré de la carte à puce.

11. Carte à puce (1) selon l'une des revendications 1 à 8, **caractérisée en ce que** le circuit de mesure sans le capteur est réalisé dans un second circuit intégré et relié électriquement au premier circuit intégré de la carte à puce, les premier et second circuits intégrés étant placés côté à côte dans le matériau isolant de la carte à puce.

12. Carte à puce (1) selon l'une des revendications 9 et 11, **caractérisée en ce que** le capteur est monté sur le circuit intégré comprenant le circuit de mesure.

13. Carte à puce (1) selon l'une des revendications précédentes, **caractérisée en ce qu'**elle comprend des moyens d'alimentation électrique des composants de la carte à puce, telles qu'une cellule solaire ou un accumulateur d'énergie électrique.

14. Instrument électronique sous forme de téléphone portable comprenant une carte à puce (1) du type SIM selon l'une des revendications précédentes, **caractérisé en ce que** le circuit de mesure (10) de la carte à puce (1) est prévu pour fournir un signal de sortie de commande sur la base d'une ou plusieurs accélérations ou secousses successives du capteur de mouvement de la carte à puce, le signal de commande permettant de commander de manière active l'exécution directe d'une action ou fonction préprogrammée dans l'instrument électronique et différente d'une fonction téléphonique.

## Claims

1. Chip card (1) of SIM type, which includes at least one integrated circuit (11) provided with a memory unit, in which personal data and/or at least one chip card identification code and/or configuration parameters can be stored, said integrated circuit being enclosed in an insulating material (3) that forms said card, the card (1) also including connecting means (2) for communicating with an electronic instrument, said connecting means being electrically connected to corresponding contact pads of the integrated circuit, the chip card further including a measuring circuit with a sensor (10) for measuring a physical parameter so as to be able to supply at least one output signal relating to the measurement (S_{D}) of the physical parameter, said measuring circuit with a sensor (10) being further enclosed in the insulating material (3) that forms said chip card,
**characterized in that** the measuring circuit with a sensor includes a movement sensor (C) for detecting a shock or for measuring an acceleration, and a sensor interface connected to the sensor, for providing a measurement signal for the physical parameter to measurement signal pre-processing means such that the pre-processing means supply an output signal relating to the parameter measurement that can be exploited directly in an active manner for commanding an action or function of an electronic instrument, and
**in that** the movement sensor (C) is a MEMS micro-electromechanical element arranged in a housing in the insulating material, which encloses the integrated circuit and the measuring circuit.

2. Chip card (1) according to claim 1, **characterized in that** the connecting means include a wireless connection device and/or an accessible electric contact zone (2) on at least one surface of the card that comes into contact with complementary contact terminals of an electronic instrument in which said chip card can be placed, said electric contacts being electrically connected to corresponding contact pads of the integrated circuit, and **in that** the measuring circuit with the sensor (10) for measuring a physical parameter can supply at least one output signal relating to the measurement (S_{D}) of the physical parameter via the wireless connection device and/or by one of the electric contacts (I/O) of the contact zone (2).

3. Chip card (1) according to claim 1, **characterized in that** the measuring circuit with a sensor is a triaxial accelerometer.

4. Chip card (1) according to claim 1, **characterized in that** the measuring circuit interface is provided on the basis of one single or several successive accelerations or shocks to said chip card, to supply a signal for commanding the execution of a pre-programmed action or function in the electronic instrument.

5. Chip card (1) according to claim 1, **characterized in that** at least one dedicated register in the integrated circuit memory unit is provided for storing the output signal relating to measurement of the measuring circuit parameter.

6. Chip card (1) according to claim 1, **characterized in that** measuring circuit configuration parameters, peculiar to a chip card user, and/or different successive output signals from the measuring circuit, are stored in a memory unit of the integrated circuit.

7. Chip card (1) according to claim 1, **characterized in that** the measuring circuit includes a movement sensor (C) and a pressure and/or temperature sensor, which can be switched on alternately.

8. Chip card (1) according to claim 1, **characterized in that**, in addition to the memory unit, the SIM card includes a microprocessor unit for processing data or commands received or transmitted by the means for connection to an electronic instrument, such as a mobile telephone, in which said chip card can be placed.

9. Chip card (1) according to any of the preceding claims, **characterized in that** the measuring circuit without the sensor is made in an integrated circuit of the chip card.

10. Chip card (1) according to any of claims 1 to 8, **characterized in that** the measuring circuit with the sensor is made in the same semiconductor substrate as the chip card integrated circuit.

11. Chip card (1) according to any of claims 1 to 8, **characterized in that** the measuring circuit without the sensor is made in a second integrated circuit and electrically connected to the first integrated circuit of the chip card, the first and second integrated circuits being placed side by side in the insulating material of the chip card.

12. Chip card (1) according to any of claims 9 and 11, **characterized in that** the sensor is mounted on the integrated circuit that includes the measuring circuit.

13. Chip card (1) according to any of the preceding claims, **characterized in that** it includes means for electrically powering the chip card components, such as a solar cell or an electric energy accumulator.

14. Electronic instrument, such as a mobile telephone including a chip card (1) of SIM type according to any of the preceding claims, **characterized in that** the measuring circuit (10) of the chip card (1) is provided for supplying a control output signal on the basis of one single or several successive accelerations or shocks to the mouvement sensor of said chip card, the control signal commanding a pre-programmed action or function to be executed directly in an active manner and a function that is not a telephonic function, in the electronic instrument.

## Patentansprüche

1. Chipkarte (1) des SIM Typs, welche zumindest einen integrierten Schaltkreis (11) aufweist, welcher mit einer Speichereinheit versehen ist, in welcher persönliche Daten und/oder mindestens ein Identikikationscode der Chipkarte und/oder Konfigurationsparameter abgespeichert werden können, wobei der integrierte Schaltkreis in ein isolierendes Material (3) eingebettet ist, welches die Karte bildet, wobei die Karte (1) ferner Anschlussmittel (2) zur Kommunikation mit einem elektronischen Instrument aufweist und wobei die Anschlussmittel elektrisch mit Anschlusskontakten des elektronischen Schaltkreises verbunden sind, die Chipkarte unter anderem eine sensorische Messschaltung (10) zum Messen eines physikalischen Parameters aufweist, um zumindest ein Ausgangssignal in Abhängigkeit der Messung (S_{D}) des physikalischen Parameters bilden zu können, die sensorische Messschaltung (10) gleichermaßen in das isolierende Material, welches die Chipkarte bildet, eingeschlossen ist,
**dadurch gekennzeichnet, dass** die sensorische Messschaltung einen Bewegungssensor (C) zum Detektieren eines Stoßes oder zur Messung einer Beschleunigung und ein Sensorinterface aufweist, welches mit dem Sensor verbunden ist, um Messsignale des physikalischen Parameters Vorverarbeitungsmitteln des Messsignals derart bereitzustellen, dass die Vorverarbeitungsmittel ein Ausgangssignal in Abhängigkeit der Messung des Parameters erzeugen, welches direkt zur Steuerung einer Aktion oder einer Funktion eines elektronischen Instrumentes benutzbar ist,
und wobei der Bewegungssensor (C) ein mikroelektromechanisches Element MEMS ist, welches in einer Aufnahme des isolierenden Materials platziert ist, welches den integrierten Schaltkreis und die Messschaltung einschließt.

2. Chipkarte (1) nach Anspruch 1, **dadurch gekennzeichnet, dass** die Verbindungsmittel eine kabellose Verbindungseinrichtung und/oder eine elektrische Kontaktzone (2) aufweisen, die zumindest über eine Seite der Karte zugänglich ist und dazu vorgesehen ist, mit komplementären Kontaktklemmen des elektronischen Instruments in Kontakt zu gelangen, in welchen die genannte Chipkarte platzierbar ist, wobei die elektrischen Kontakte elektrisch mit den korrespondierenden Anschlusskontakten des integrierten Schaltkreises verbunden sind, und wobei die Messsensorschaltung (10) zum Messen des physikalischen Parameters zumindest ein Ausgangssignal in Abhängigkeit der Messung (S_{D}) des physikalischen Parameters über die drahtlose Verbindungseinrichtung und/oder über die elektrischen Kontakte (I/O) der Kontaktzone (2) erzeugen kann.

3. Chipkarte (1) nach Anspruch 1, **dadurch gekennzeichnet, dass** die Mlesssensorschallung ein triaxialer Beschleunigungsmesser ist.

4. Chipkarte (1) nach Anspruch 1, **dadurch gekennzeichnet, dass** das Interface der Messschaltung auf der Basis einer einzigen oder mehrerer Beschleunigungen oder aufeinanderfolgender Stöße der Chipkarte vorgesehen ist, um ein Steuersignal zur Ausführung einer vorprogrammierten Aktion oder Funktion im elektronischen Instrument zu erzeugen.

5. Chipkarte (1) nach Anspruch 1, **dadurch gekennzeichnet, dass** zumindest ein zugeordnetes Register in der Speichereinheit des integrierten Schaltkreises zum Speichern des Ausgangssignals in Abhängigkeit von der Messung des Parameters der Messschaltung vorgesehen ist.

6. Chipkarte (1) nach Anspruch 1, **dadurch gekennzeichnet, dass** die Konfigurationsparameter der Messschaltung, insbesondere solche eines Anwenders der Chipkarte und/oder unterschiedlicher aufeinanderfolgender Ausgangssignale der Messschaltung in der Speichereinheit des integrierten Schaltkreises abgespeichert werden.

7. Chipkarte (1) nach Anspruch 1, **dadurch gekennzeichnet, dass** die Messschaltung einen Bewegungssensor (C) und einen Sensor für Druck und/oder für Temperatur aufweist, die abwechselnd in Betrieb genommen werden können.

8. Chipkarte (1) nach Anspruch 4, **dadurch gekennzeichnet, dass** die SIM Karte des Weiteren eine Speichereinheit und eine Mikroprozessoreinheit aufweist, um Daten oder Steuerbefehle zu verarbeiten, die erhalten oder über die Verbindungsmittel zum elektronischen Instrument, wie ein portables Telefon, in welchem die genannte Chipkarte platzierbar ist, übertragen wurden.

9. Chipkarte (1) nach einem der vorhergehenden Patentansprüche, **dadurch gekennzeichnet, dass** die Messschaltung ohne den Sensor im integrierten Schaltkreis der Chipkarte verwirklicht ist.

10. Chipkarte (1) nach einem der Ansprüche 1 bis 8, **dadurch gekennzeichnet, dass** die Messschaltung mit dem Sensor im gleichen 1 lalbleitersi.ibstrat wie der integrierte Schaltkreis der Chipkarte verwirklicht ist.

11. Chipkarte (1) nach einem der Ansprüche 1 bis 8, **dadurch** gekenntzeichnet, dass die Messschaltung ohne den Sensor in einem zweiten integrierten Schaltkreis verwirklicht und elektrisch mit dem ersten integrierten Schaltkreis der Chipkarte elektrisch verbunden ist, wobei erste und zweite integrierte Schaltkreise nebeneinander in dem isolierenden Material der Chipkarte platziert sind.

12. Chipkarte (1) nach einem der Ansprüche 9 und 11, **dadurch gekennzeichnet, dass** der Sensor auf dem integrierten Schaltkreis, welcher eine Messschaltung aufweist, angeordnet ist.

13. Chipkarte (1) nach einem der vorhergehenden Ansprüche, **dadurch gekennzeichnet, dass** sie elektrische Versorgungsmittel der Chipkarte aufweist, wie eine Solarzelle oder ein Akkumulator elektrischer Energie.

14. Elektronisches Instrument in Form eines portablen Telefons, welches eine Chipkarte (1) des SIM Typs nach einem der vorhergehenden Patentansprüche aufweist, **dadurch gekennzeichnet, dass** die Messschaltung (10) der Chipkarte (1) dazu ausgebildet ist, ein Ausgangssteuerungssignal auf der Basis einer einzigen oder mehreren Beschleunigungen oder aufeinanderfolgender Stöße des Bewegungssensors der Chipkarte zu erzeugen, wobei das Steuersignal eine aktive direkte Ansteuerung einer Aktion oder vorprogrammierten Funktion im elektronischen Instrument anders als eine telefonische Funktion erlaubt.
